# EUROPEAN PATENT SPECIFICATION

(11) **EP 3 370 190 B1**
(45) Date of publication and mention of the grant of the patent: **06.05.2020**
(21) Application number: 15907327.9
(22) Date of filing: 30.10.2015
(51) Int. Cl.: G06K 19/077, G06K 19/04, F16B 23/00

(54) **BOLT WITH BUILT-IN TAG**
BOLZEN MIT INTEGRIERTEM ETIKETT
BOULON AVEC ÉTIQUETTE INTÉGRÉE

(43) Date of publication of application: 05.09.2018
(73) Proprietor: Hitachi Systems, Ltd., Tokyo 141-8672 (JP); Kyoto Tool Co., Ltd., Kyoto-shi Kyoto 612-8393 (JP); Hitachi, Ltd., Tokyo 100-8280 (JP)
(72) Inventor: INOUE, Kunihiro, Matsudo-shi Chiba 271-0092 (JP); OKADA, Norihisa, Tokyo 100-8280 (JP); NISHIOKA, Masaaki, Kyoto 613-0034 (JP); NAKATA, Shogo, Kyoto 613-0034 (JP); YAMAUCHI, Shigeru, Tokyo 141-8672 (JP); SARUYAMA, Masaaki, Tokyo 141-8672 (JP)
(74) Representative: Zimmermann, Tankred Klaus
(86) International application number: PCT/JP2015/080790
(87) International publication number: WO 2017/072963

(56) References cited:
- DE-A1- 19 828 700
- JP-A- 2007 172 527
- JP-A- 2007 193 698
- JP-A- 2008 135 034
- US-A1- 2013 186 951

## Description

### {Technical Field}

The present invention relates to a tag to be attached to a bolt, a bolt with a built-in tag, and a bolt to which a tag is to be attached.

### {Background Art}

Currently, individual management using an IC tag including an IC chip is performed in various fields. In the individual management, wireless communication performed, for example, between an RFID reader/writer device and the IC tag enables transmission and reception of information between the IC tag and the RFID reader/writer device.

Examples of a product including the IC tag include those having a bolt including the IC tag (hereinafter, referred to as a bolt with a built-in tag) as disclosed in JP 2006-202318 A or JP 2006-202257 A. Besides, in recent years, an accident such as falling or the like of parts due to forgetting to fasten a bolt or the like is a problem in a railway vehicle or the like. Therefore, it is desired to manage whether the bolt is surely fastened, using the above-described bolt with a built-in tag.

DE 198 28 700 A1 describes a bolt with an information storage device for high quality joints to enable simple documentation of, e.g., a tightening force. The bolt has an electronic storage device in its head or shaft. The data in the electronic storage device can be read out with an electronic reader. The storage device can be written to by an electronic writer. The storage device can be accommodated in an aperture in the head of the bolt and is protected by a mechanical protection arrangement which enables electronic data reading and writing.

US 2013/186951 A1 describes an intelligent fastener having a head and an externally threaded shank for threaded engagement with a structural member. The head has a recess formed in the top surface for mounting an RFID tag with a memory containing information specific to the fastener-such as fastener identification, specified torque value and other information-an antenna for enabling bidirectional communication with an RFID tag reader, and a torque value sensor for determining the torque applied to the fastener by a fastener installation tool. Once installed, the existing torque on a collection of fasteners is measured by using an RFID tag reader to scan the information stored in the memory of each fastener.

JP 2007/172527 A describes a compact non-contact type data carrier device being improved in mountability on an article and available on metal while suppressing the increase of manufacturing costs. A non-contact type data carrier device is provided with a non-contact type data carrier inlet having an antenna coil in a multi-layer structure configured by interlayer connecting antenna patterns installed in each of a plurality of layers and an IC chip connected to the antenna coil, and mounted with a storage circuit and a communication control circuit; and a pedestal part made of insulating resin, having a function of isolating the non-contact type data carrier inlet from a mounted object side while supporting the non-contact data carrier inlet.

### {Summary of Invention}

Incidentally, in configurations disclosed in JP 2006-202318 A or JP 2006-202257 A, a recessed part is formed on the head side of the bolt and an IC tag is embedded in the recessed part. In this case, filling the recessed part with resin for fixation or fixing the IC tag using adhesive is not preferable in a severe environment such as the outdoors where the IC tag vibrates for a long period of time like, for example, the railway vehicle, in view of deterioration of the resin and the like. Therefore, in the case where the IC tag is attached to the head of the bolt, it is desired to surely prevent falling of the IC tag without filling with the adhesive or resin.

However, if a large recessed part or a processed portion other than the recessed part is provided in the head of the bolt, mechanical strength (rated strength) of the bolt is deteriorated and such bolts are not suitable to use at the portion where high reliability is required such as the railway vehicle. Accordingly, it is desired to prevent falling of the IC tag while having a minimum recessed part in terms of diameter (area) or depth to prevent deterioration in mechanical strength of the bolt.

The present invention has been made based on the above circumstances, and it is an object of the present invention to provide a bolt with a built-in tag capable of preventing falling of an IC tag while having a minimum recessed part to prevent deterioration in mechanical strength of a bolt without using adhesive.

This object is achieved by a bolt with a built-in tag according to claim 1.

### {Solution to Problem}

To solve the above problem, according to the present invention, there is provided a bolt with a built-in tag having a fitting hole, the tag to be attached to a bolt, the bolt with the built-in tag including: an IC inlet having an IC chip and a coil antenna; and a tag protection part which covers the IC inlet, wherein a locking part projecting to an outer diameter side more than other portions of the tag protection part is provided on an outer peripheral side of the tag protection part, and the locking part comes into contact with a coming-off preventing part located at an opening edge part of the fitting hole to prevent the tag to be attached to a bolt from coming off the fitting hole. The tag protection part includes: a primary molded part which is formed with a recessed fitting part for fitting the IC inlet thereinto and formed of a thermoplastic resin; and a secondary molded part which is fixed to the primary molded part to seal the recessed fitting part in a lid shape, and is formed of a thermoplastic resin.

Further, in another aspect of the present invention, it is preferable in the above invention that: an escape groove in a ring shape recessed from one surface of the tag protection part is formed on the outer peripheral side of the tag protection part; and a side surface of the tag protection part is an inclined surface which is inclined to gradually go toward a center side in a radial direction as going from the one surface toward the other surface.

Further, in yet another aspect of the present invention, it is preferable in the above invention that: the tag protection part, when inserted into the fitting hole of the bolt, is inserted while elastically deforming due to existence of the coming-off preventing part which projects toward the center side in the radial direction at an opening portion of the fitting hole, in which Tc, Ta, Tb are set to be Tc ≤ Ta ≤ Tb where a thickness in a radial direction of a portion on the outer peripheral side outer than a groove center of the escape groove is Ta, an insertion limit thickness in elastic deformation when inserted into the fitting hole is Tb, and a thickness of a lower limit of generating clicking feeling when inserted into the fitting hole is Tc.

Further, in the case of fastening a nut to a bolt, in another aspect of the present invention, it is preferable in the above invention that: a projecting support part is provided in a manner to project from an inner wall of the recessed fitting part; and the IC inlet is supported in a holded state while being in contact with the projecting support part inside the recessed fitting part.

### {Advantageous Effects of Invention}

According to the present invention, it is possible to provide a tag to be attached to a bolt, a bolt with a built-in tag, and a bolt to which a tag is to be attached, capable of preventing falling of an IC tag while having a minimum recessed part to prevent deterioration in mechanical strength of a bolt without using adhesive.

### {Brief Description of Drawings}

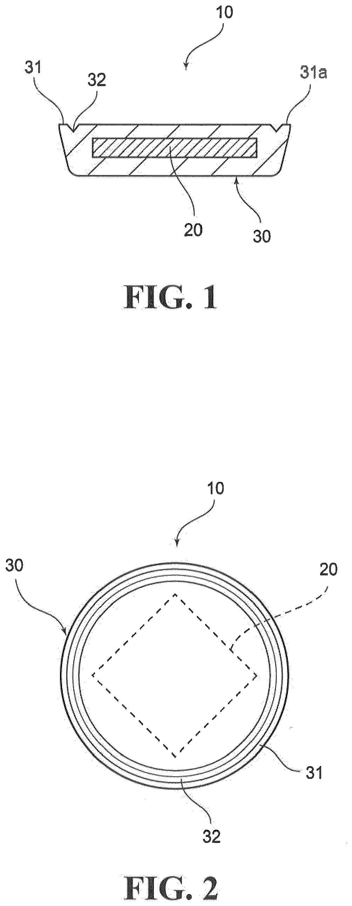

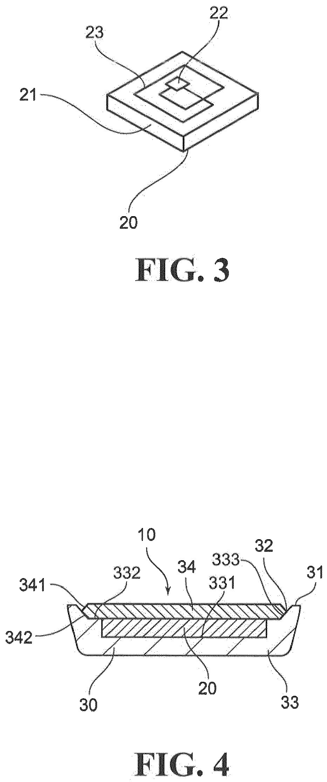

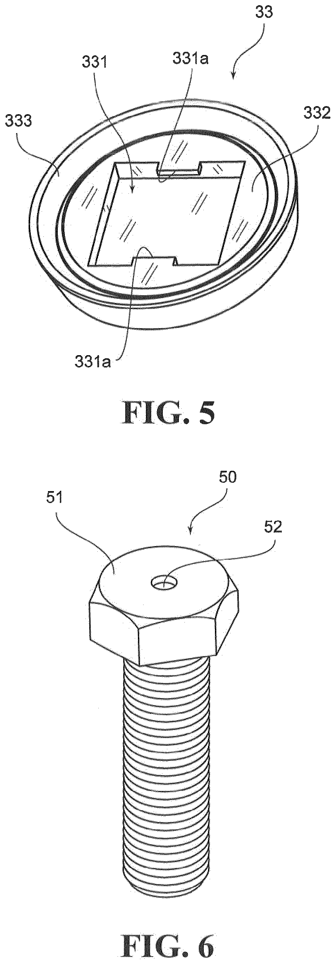

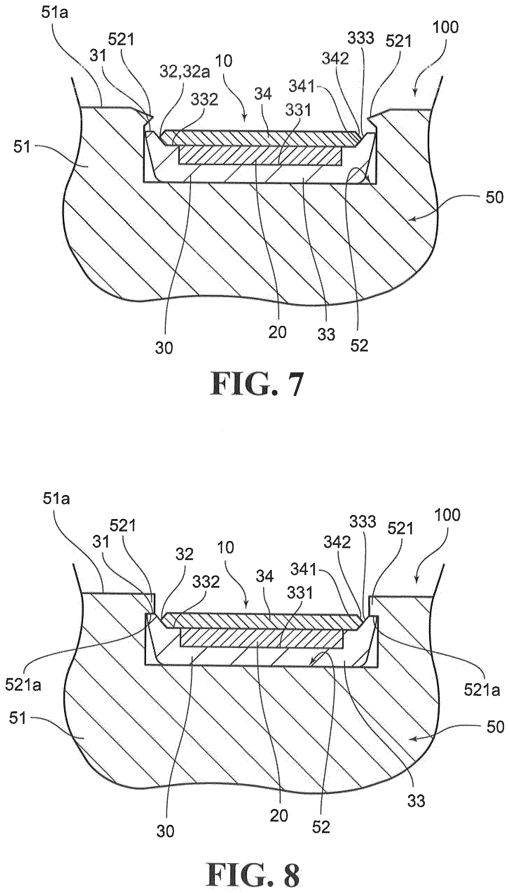

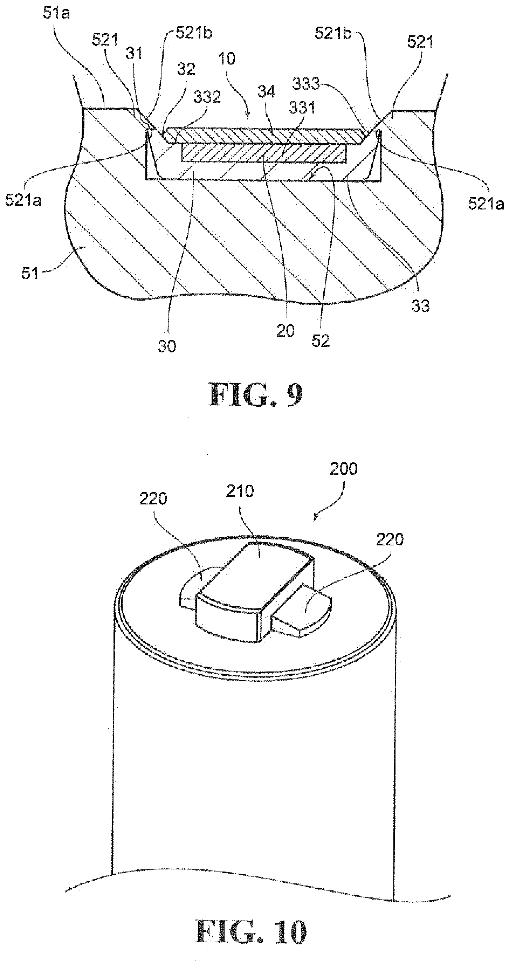

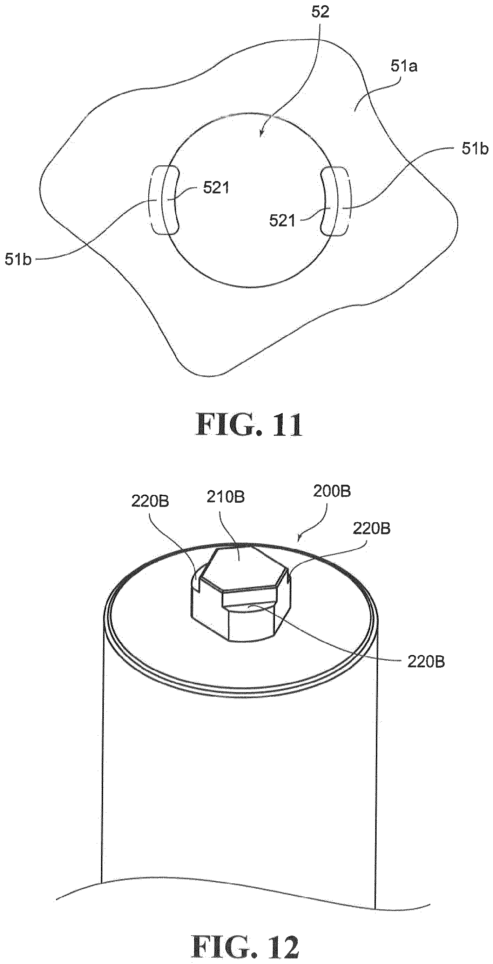

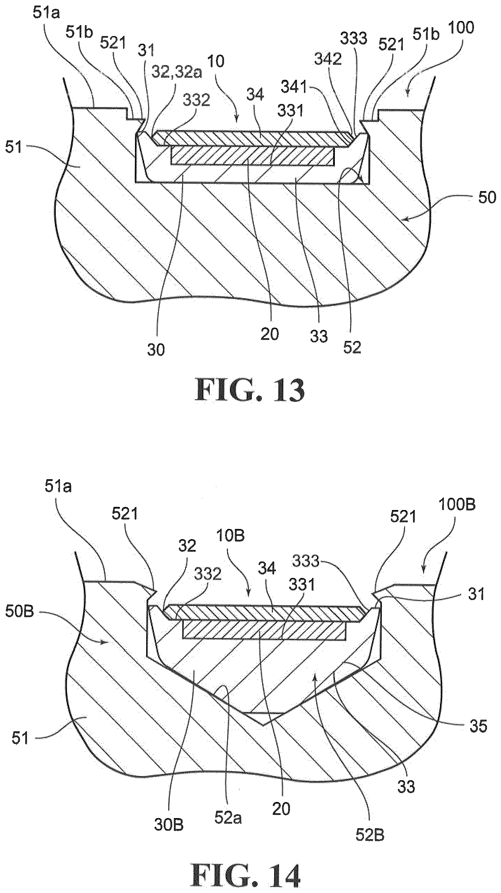

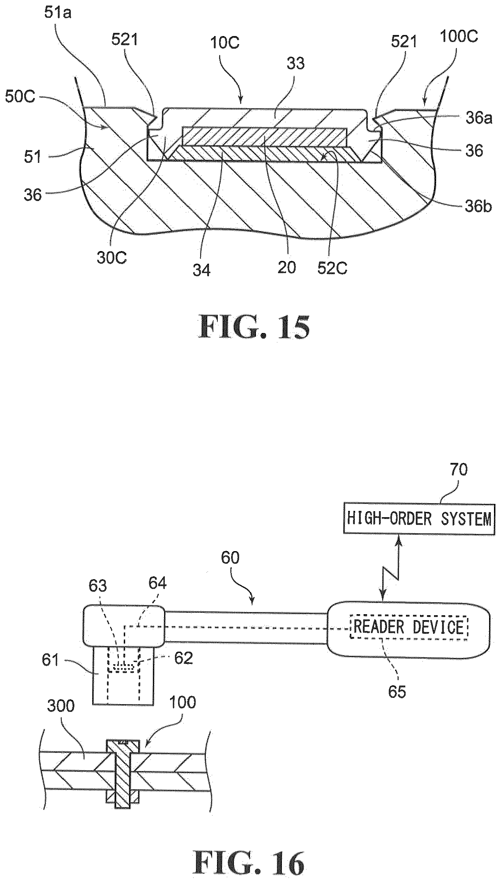

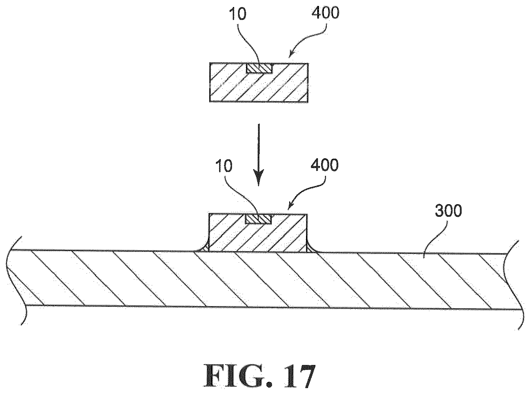

{Fig. 1} Fig. 1 is a side sectional view illustrating a configuration of a tag to be attached to a bolt according to a first embodiment;
{Fig. 2} Fig. 2 is a plan view illustrating the configuration of the tag to be attached to a bolt illustrated in Fig. 1;
{Fig. 3} Fig. 3 is a perspective view illustrating a configuration of an IC inlet used in the tag to be attached to a bolt in Fig. 1;
{Fig. 4} Fig. 4 is a side sectional view illustrating the configuration of the tag to be attached to a bolt according to the first embodiment, and is a view illustrating a case where a head is comprised of a primary molded part and a secondary molded part;
{Fig. 5} Fig. 5 is a perspective view illustrating a configuration of the primary molded part illustrated in Fig. 4;
{Fig. 6} Fig. 6 is a perspective view illustrating a configuration of a bolt with a built-in tag according to the first embodiment of the present invention;
{Fig. 7} Fig. 7 is a partial side sectional view illustrating a configuration around a fitting hole of a head of the bolt with a built-in tag illustrated in Fig. 6;
{Fig. 8} Fig. 8 is a partial side sectional view illustrating a configuration around the fitting hole of the head of the bolt with a built-in tag according to a modification example of Fig. 7;
{Fig. 9} Fig. 9 is a partial side sectional view illustrating a configuration around the fitting hole of the head of the bolt with a built-in tag according to a modification example of Fig. 8;
{Fig. 10} Fig. 10 is a partial perspective view illustrating a punch according to the first embodiment of the present invention and being one kind of a caulking tool;
{Fig. 11} Fig. 11 is a plan view illustrating an appearance where a coming-off preventing part is formed by using the caulking tool illustrated in Fig. 10;
{Fig. 12} Fig. 12 is a partial perspective view illustrating a punch in a different form from that of the punch illustrated in Fig. 10;
{Fig. 13} Fig. 13 is a partial side sectional view illustrating a configuration around the fitting hole of the head of the bolt with a built-in tag according to the modification example of Fig. 7;
{Fig. 14} Fig. 14 is a partial side sectional view illustrating configurations of a tag to be attached to a bolt, a bolt with a built-in tag, and a bolt to which a tag is to be attached according to a configuration example different from that of the tag to be attached to a bolt illustrated in Fig. 1;
{Fig. 15} Fig. 15 is a partial side sectional view illustrating configurations of a tag to be attached to a bolt, a bolt with a built-in tag, and a bolt to which a tag is to be attached according to a configuration example further different from those of the tag to be attached to a bolt illustrated in Fig. 1 and Fig. 14;
{Fig. 16} Fig. 16 is diagram illustrating an image of communication performed between a tool and a bolt with a built-in tag which is attached to a target member; and
{Fig. 17} Fig. 17 is a side sectional view illustrating a configuration of a pseudo bolt according to a second embodiment and illustrating a state where the pseudo bolt is attached to a target member.

### {Description of Embodiments}

### (First Embodiment)

Hereinafter, a tag 10 to be attached to a bolt, a bolt 50 to which a tag is to be attached, and a bolt 100 with a built-in tag according to a first embodiment of the present invention will be described based on the drawings.

### <Regarding a configuration of the bolt attachment tag 10>

Fig. 1 is a side sectional view illustrating a configuration of the tag 10 to be attached to a bolt. Fig. 2 is a plan view illustrating the configuration of the tag 10 to be attached to a bolt. As illustrated in Fig. 1 and Fig. 2, the tag 10 to be attached to a bolt has an IC inlet 20 and a tag protection part 30.

The IC inlet 20 is, for example, a main portion constituting a passive-type IC tag, has no battery, and obtains power based on electromagnetic waves transmitted from a reader device to send electromagnetic waves based on the power. Fig. 3 is a perspective view illustrating a configuration of the IC inlet 20. As illustrated in Fig. 3, the IC inlet 20 includes an IC tag base board 21, an IC chip 22, and a coil antenna 23. The IC tag base board 21 is formed in a flat-plate shape forming an almost rectangular shape. As the IC tag base board 21, for example, a glass epoxy substrate or a film made of resin such as PET can be used. The IC tag base board 21 has the IC chip 22 and the coil antenna 23, and the IC chip 22 of them is a portion that stores various kinds of data.

In a manner to cover the IC inlet 20, the tag protection part 30 is provided. As illustrated in Fig. 1, the tag protection part 30 covers the entire, in particular, the front of the IC inlet 20 to prevent the IC inlet 20 from being exposed to an external environment such as the outdoors. Note that since the configuration illustrated in Fig. 1 and Fig. 2 is such a configuration that the tag protection part 30 covers the IC inlet 20 in the rectangular flat-plate shape, the tag protection part 30 is provided to have its external shape in a disk shape so that the tag 10 to be attached to the bolt is in a shape conformed to the shape of a later-described fitting hole 52.

The tag protection part 30 is made of resin as material, and the material may be either hard resin or soft resin. Examples of the hard resin include PC (polycarbonate), POM (polyacetal), PA (polyamide), acrylic, PPS (polyphenylene sulfide), hard vinyl chloride, ABS resin, m-PPE (modified polyphenyleneether), PBT (polybutylene terephthalate), PAI (polyamide-imide), PEI (polyetherimide), PAR (polyarylate), PEEK (polyetheretherketone), PSF (polysulfone), PES (polyethersulfone) and so on.

Besides, examples of the soft resin, which is more likely to bend than the hard resin, include rubber-based materials such as ethylene propylene rubber such as EPM, EPDM and so on, CSM (chlorosulfonated polyethylene), silicone rubber, acrylic rubber such as ACM, ANM and so on, epichlorohydrin rubber such as CHR, CHC and so on, and various kinds of TPE (thermoplastic elastomer) other than the listed ones.

Note that since the tag 10 to be attached to the bolt is used for a long period of time in the external environment, the hard resin preferably has weather resistance. Examples of the hard resin include polycarbonate (PC), acrylic, hard vinyl chloride, PBT (polybutylene terephthalate), PAI (polyamide-imide), PEI (polyetherimide), PAR (polyarylate), PEEK (polyetheretherketone) and so on. Besides, the soft resin preferably has weather resistance similarly to the hard resin. Examples of rubber having weather resistance include fluorine rubber including FKM, FEPM, FEKM and so on, silicone rubber, ethylene propylene rubber such as EPM, EPDM and so on, acrylic rubber such as ACM, ANM and so on, and epichlorohydrin rubber such as CHR, CHC and so on.

Further, both of the hard resin and the soft resin are preferably thermoplastic resins. This is because in the case where the hard resin and the soft resin are thermoplastic resins, even when the tag protection part 30 is composed of two members, the two members can be thermal-fusion bonded. All of the above-listed resins apply to the hard resin of the thermoplastic resins. Besides, examples of the soft resin of the thermoplastic resins include fluorine rubbers having thermoplasticity, acrylic rubber such as ACM, ANM and so on, and various kinds of TPE other than the above-listed ones.

However, the hard resin and the soft resin are not limited to the listed ones, but may be other than them. Further, the hard resin and the soft resin may be those made by appropriately adding an additive agent to the listed hard resins and soft resins or other resins, or may be a combination of two or more kinds of resins.

As illustrated in Fig. 1, the cross-sectional shape of the tag protection part 30 is provided in an almost trapezoidal shape including a set of parallel sides. Hereinafter, a longer side of the set of parallel sides (an upper base and a lower base) of the almost trapezoidal shape is regarded as a long side and a shorter side of them is regarded as a short side. A locking part 31 is provided on an outer peripheral side of the surface of the tag protection part 30. The locking part 31 is a portion projecting to an outer diameter side more than other portions of the tag protection part 30. Further, the locking part 31 is a portion coming into contact with a coming-off preventing part 521 located at a later-described opening edge part of the fitting hole 52. Thereby, the locking part 31 is a portion that prevents the tag 10 to be attached to the bolt from coming off the fitting hole 52.

Further, the tag protection part 30 is provided with an escape groove 32. The escape groove 32 is a groove in a ring shape provided on the outer peripheral side of the tag protection part 30. The escape groove 32 is provided in a manner to be carved from the long side toward the short side of the tag protection part 30 including the set of parallel sides and having the cross-sectional shape in the trapezoidal shape. In other words, the escape groove 32 is provided in the surface (one surface) of the tag protection part 30.

In the configuration illustrated in Fig. 1, the escape groove 32 has an almost triangular shape in cross section. The escape groove 32 is a portion for allowing elastic deformation of a wall portion of the tag protection part 30 located on the outer peripheral side from the escape groove 32 when the tag 10 to be attached to the bolt is pushed into the fitting hole 52 existing at a head 51 of a later-described bolt 50 with the built-in tag.

Providing the tag protection part 30 in the almost trapezoidal shape and providing the escape groove 32 on the side corresponding to the long side of the outer peripheral side in the cross-sectional shape of the tag protection part 30 makes the outer peripheral side of the tag protection part 30 become more likely to be deformed when the tag protection part 30 is fitted into the later-described fitting hole 52 and thereby achieves a configuration of easily fitting the tag 10 to be attached to the bolt into the fitting hole 52. Further, on the lower side of the escape groove 32, the side surface of the tag protection part 30 is provided with an inclined surface that gradually goes toward the center in the radial direction as going from the front surface (one surface) toward the rear surface (the other surface). Accordingly, the escape groove 32 has a state where its wall is removed on the lower side, thereby improving the insertion property and easy to elastically deform when the tag 10 to be attached to the bolt is inserted into the later-described fitting hole 52.

Here, in the case where the tag protection part 30 is formed of the hard resin, the tag protection part 30 preferably generates clicking feeling when the tag 10 to be attached to the bolt is fitted into the later-described fitting hole 52. More specifically, when the tag 10 to be attached to the bolt is inserted into the fitting hole 52, mainly the outer peripheral side (the locking part 31 side) of the escape groove 32 of the tag protection part 30 is largely deformed, and restoring force is accumulated due to the deformation. Then, when the most upper side of the tag 10 to be attached to the bolt gets over the coming-off preventing part 521, the tag protection part 30, when returning to its original shape by the accumulated restoring force, preferably generates the clicking feeling by hitting an inner wall of the fitting hole 52 or the like.

To generate such clicking feeling, a peripheral side portion outer than a groove center 32a of the escape groove 32 needs to have a certain wall thickness or more. Accordingly, a wall thickness Ta (not illustrated) in a radial direction of the peripheral side portion (locking part 31 side) outer than the groove center 32a of the escape groove 32 preferably has a wall thickness of equal to or less than a thickness Tb of an insertion limit when the tag 10 to be attached to the bolt is inserted into the fitting hole 52 while having a wall thickness equal to or more than a thickness Tc of a lower limit generating the clicking feeling. In other words, it is preferable to satisfy Tc ≤ Ta ≤ Tb.

Note that the tag 10 to be attached to the bolt illustrated in Fig. 1 and Fig. 2 preferably has components illustrated in Fig. 4 for easy manufacture. Fig. 4 is a side sectional view illustrating the configuration of the bolt attachment tag 10, and is a view illustrating a case where the tag protection part 30 is composed of a primary molded part 33 and a secondary molded part 34. As illustrated in Fig. 4, the tag protection part 30 has the primary molded part 33 and the secondary molded part 34.

Fig. 5 is a perspective view illustrating a configuration of the primary molded part 33. As illustrated in Fig. 5, the primary molded part 33 is a portion in a container shape, and includes a recessed fitting part 331 being a recessed part for fitting the IC inlet 20 thereinto. The primary molded part 33 further includes a pedestal part 332 and a tapered part 333 in addition to the recessed fitting part 331. The pedestal part 332 is a flat portion for receiving the secondary molded part 34 and is provided around the recessed fitting part 331. Note that in the state where the IC inlet 20 is fitted in the recessed fitting part 331, the pedestal part 332 is preferably provided to be flash with the upper surface of the IC inlet 20.

Further, as illustrated in Fig. 5, a projecting support part 331a preferably projects from an inner wall of the recessed fitting part 331. The projecting support part 331a is a portion for preventing the IC inlet 20 from falling off the recessed fitting part 331 before the secondary molding when the IC inlet 20 is fitted into the recessed fitting part 331. In the configuration illustrated in Fig. 5, a pair of the projecting support parts 331a are provided by projecting from opposing inner walls. Further, the interval between tips of the pair of opposing projecting support parts 331a is provided to be slightly shorter than the length in the vertical direction or the horizontal direction of the IC inlet 20. Accordingly, the IC inlet 20 can be held between the pair of projecting support parts 331a.

Further, the tapered part 333 is a wall surface inclined upward as going from the center side toward the outside in the radial direction. The tapered part 333 is a portion where the wall surface on the outer peripheral side of the escape groove 32 is formed after the secondary molded part 34 is attached thereto.

Besides, the secondary molded part 34 is a member having an external appearance in a disk shape. The secondary molded part 34 is a member to be positioned on a top of the IC inlet 20 after the IC inlet 20 is fitted into the recessed fitting part 331, and a portion that functions as a so-called lid. Therefore, when the later-described secondary molded part 34 is positioned on the top of the IC inlet 20, the outer peripheral side of the secondary molded part 34 is located on the pedestal part 332.

On the outer peripheral side of the secondary molded part 34, two inclined parts exist. More specifically, the secondary molded part 34 is provided with a lower inclined part 341 and an upper inclined part 342. The lower inclined part 341 is a portion coming into contact with the taper part 333 of the primary molded part 33. Accordingly, the lower inclined part 341 is inclined upward as going from the center side toward the outside in the radial direction. Besides, the upper inclined part 342 is a portion forming the escape groove 32 in conjunction with the taper part 333. Accordingly, the upper inclined part 342 is a portion inclined downward as going from the center side toward the outside in the radial direction.

As described above, the tag protection part 30 is preferably composed of the primary molded part 33 and the secondary molded part 34. Here, at least one of the primary molded part 33 and the secondary molded part 34 is formed of a thermoplastic resin. In this case, the primary molded part 33 and the secondary molded part 34 can be fixed together by thermal fusion bonding. Note that in the case where the primary molded part 33 and the secondary molded part 34 are formed of the same thermoplastic resin, the fusion property can be increased to enhance the sealing property of the IC inlet 20.

### <Regarding the bolt 50 to which a tag is to be attached >

Fig. 6 is a perspective view illustrating a configuration of the bolt 50 to which a tag is to be attached. As illustrated in Fig. 6, the head 51 of the bolt 50 to which a tag is to be attached is provided with the fitting hole 52. Into the fitting hole 52, the above-described tag 10 to be attached to a bolt is fitted. The fitting hole 52 is a hole portion recessed by a predetermined depth from an upper surface 51a of the head 51. The configuration near the fitting hole 52 is illustrated in Fig. 7. Fig. 7 is a partial side sectional view illustrating the configuration near the fitting hole 52 of the head 51 of the bolt 50 to which a tag is to be attached.

As illustrated in Fig. 7, the coming-off preventing part 521 projecting toward an inner diameter side is provided at an edge portion on an opening side of the fitting hole 52. Accordingly, the distance from a tip on the inner diameter side of the coming-off preventing part 521 to the center in the radial direction of the fitting hole 52 is provided to be smaller than a radius on a deep side of the fitting hole 52. Accordingly, when the tag 10 to be attached to a bolt is fitted into the fitting hole 52, the tag 10 to be attached to a bolt is prevented from coming off the fitting hole 52.

On the other hand, though the coming-off preventing part 521 is provided, an elastic deformation amount can be ensured when the tag 10 to be attached to a bolt is fitted into the fitting hole 52 because the escape groove 32 is provided in the tag protection part 30 of the tag 10 to be attached to a bolt, thereby making it possible to surely perform the fitting.

Note that in the case where the tag protection part 30 is formed of a hard resin and the coming-off preventing part 521 is formed before the tag 10 to be attached to a bolt is fitted into the fitting hole 52, a projecting tip end side of the coming-off preventing part 521 preferably projects to a degree not reaching the groove center 32a of the escape groove 32. This is because if the projecting tip end side of the coming-off preventing part 521 reaches the groove center 32a, deformation of the outer peripheral side of the tag protection part 30, if occurring when the tag protection part 30 is inserted into the fitting hole 52, cannot be sufficiently absorbed, resulting in the possibility of difficulty in fitting.

However, the difficulty in fitting also leads to difficulty in coming off, so that the projecting tip end side of the coming-off preventing part 521 may be located on the center side in the radial direction beyond the groove center 32a of the escape groove 32 in the radial direction. Further, in the case where the coming-off preventing part 521 is formed after the tag 10 to be attached to a bolt is fitted into the fitting hole 52, the projecting tip end side of the coming-off preventing part 521 may be located on the center side in the radial direction beyond the groove center 32a of the escape groove 32.

Further, in the case where the coming-off preventing part 521 is formed after the tag 10 to be attached to a bolt is inserted into the fitting hole 52, the coming-off preventing part 521 projecting to the center side in the radial direction more than the inner diameter of the fitting hole 52 is obtained by performing later-described caulking.

### <Regarding the bolt 100 with a built-in tag and manufacture thereof>

The bolt 100 with a built-in tag can be formed by fitting the tag 10 to be attached to a bolt into the above-described fitting hole 52 of the bolt 50 to which a tag is to be attached. For formation of the bolt 100 with a built-in tag, there are roughly classified two methods.

### (1) A case where the coming-off preventing part 521 is formed in advance.

First, one fitting method may form the coming-off preventing part 521 in advance at an opening portion of the fitting hole 52 of the bolt 50 to which a tag is to be attached. In other words, the coming-off preventing part 521 is formed at a stage prior to fitting the tag 10 to be attached to a bolt into the fitting hole 52 in some cases. In this configuration, when the tag 10 to be attached to a bolt is fitted into the fitting hole 52, the tag 10 to be attached to a bolt elastically deforms. Then, after the tag 10 to be attached to a bolt gets over the coming-off preventing part 521 on the deep side of the fitting hole 52, the tag 10 to be attached to a bolt returns to the original shape.

When the fitting is performed as described above, a snap fit mechanism is realized. In other words, when the tag 10 to be attached to a bolt is tried to be detached from the fitting hole 52, the outer peripheral side (locking part 31 side) of the tag protection part 30 is caught by the coming-off preventing part 521. This prevents the tag 10 to be attached to a bolt from coming off the fitting hole 52, and fixes the tag 10 to be attached to a bolt to the tag attachment bolt 50.

Note that the snap fit mechanism is realized not in the case where the tag protection part 30 is formed of a hard resin but also in the case where the tag protection part 30 is formed of a soft resin. Here, in the case where the tag protection part 30 is formed of the hard resin, the tag protection part 30 preferably generates the clicking feeling when the 10 to be attached to a bolt is fitted into the fitting hole 52. On the other hand, in the case where the tag protection part 30 is formed of the soft resin, the clicking feeling is hardly generated but the tag 10 to be attached to a bolt can be easily fitted into the fitting hole 52 by elastic deformation of the whole tag 10 to be attached to a bolt. Note that also in the case where the tag protection part 30 is formed of the soft resin, the tag protection part 30 may be configured to generate the clicking feeling.

Here, in the case where the coming-off preventing part 521 is formed before the tag 10 to be attached to a bolt is fitted into the fitting hole 52, the fitting hole 52 having the coming-off preventing part 521 can be formed by forming the fitting hole 52 using a countersinking drill and then performing processing using a boring machine with the opening portion left or performing processing using a milling machine with a T-slot cutter attached thereto. In the case of using the T-slot cutter, the fitting hole 52 having the coming-off preventing part 521 existing in the opening portion can be formed by rotating the spindle of the milling machine and the T-slot cutter while moving the spindle along a predetermined circumference.

Besides, the coming-off preventing part 521 may be formed by plastically deforming the opening edge part of the fitting hole 52 by hitting or the like. Examples of the above include various kinds of processing such as rotary caulking and caulking using a later-described punch 200 or the like. Besides, the fitting hole 52 itself may be formed not by the countersinking drill but by heading similarly to a hexagon socket head bolt that is currently distributed.

Note that a partial side sectional view around the fitting hole 52 formed using the T-slot cutter or the like is illustrated in Fig. 8. Fig. 8 is a partial side sectional view illustrating a configuration around the fitting hole 52 of the head 51 of the bolt 50 to which a tag is to be attached according to a modification example of Fig. 7. In the fitting hole 52 illustrated in Fig. 8, the coming-off preventing part 521 has no tapered part. In addition, the coming-off preventing part 521 has, at its lower side (deep side), a plane contact part 521a that is parallel to the bottom surface of the fitting hole 52. The plane contact part 521a can come into plane contact with the outer peripheral side of the tag protection part 30. Accordingly, the configuration illustrated in Fig. 8 is a configuration in which the bolt attachment tag 10 hardly comes off when the bolt attachment tag 10 is fitted into the fitting hole 52.

Further, by processing the coming-off preventing part 521 illustrated in Fig. 8, a configuration as illustrated in Fig. 9 can also be realized. Fig. 9 is a partial side sectional view illustrating a configuration around the fitting hole 52 of the head 51 of the bolt 50 to which a tag is to be attached according to a modification example of Fig. 8. As illustrated in Fig. 9, a guide part 521b in a taper shape is provided on the side of the coming-off preventing part 521 opposite to the plane contact part 521a. The guide part 521b is a portion that functions as a guide when the tag 10 to be attached to a bolt is fitted into the fitting hole 52, and is formed to go toward the center side in the radial direction as going toward the lower side (deep side) of the fitting hole 52. Accordingly, the workability when fitting the bolt attachment tag 10 can be improved.

Further, the coming-off preventing part 521 may be formed by caulking using a caulking tool after the fitting hole 52 is formed. Examples of the caulking tool for performing caulking include the one illustrated in Fig. 10. Fig. 10 is a partial perspective view illustrating the punch 200 being one kind of the caulking tool. As illustrated in Fig. 10, the punch 200 includes an insertion guide part 210 and a pressing part 220. The insertion guide part 210 has a form made by evenly cutting at two parallel planes a circular cylinder having a predetermined height. Further, the diameter of an arc-shaped portion of the insertion guide part 210 corresponds to the inner diameter of the fitting hole 52. In other words, the insertion guide part 210 is provided to be insertable into the fitting hole 52.

The pressing part 220 also has a form similar to that of the insertion guide part 210, but its height is provided to be sufficiently lower than that of the insertion guide part 210. Here, the length from one end to the other end of the pressing part 220 is provided to be longer than that of the insertion guide part 210. Accordingly, the pressing part 220 cannot be inserted into the fitting hole 52. However, the pressing part 220 forms a taper shape that is lower in height as going from the middle side (insertion guide part 210 side) toward the end part side.

By inserting the insertion guide part 210 in such a form into the fitting hole 52, the punch 200 is positioned, and the punch 200 is hit with a not-illustrated hammer or the like from the opposite side to the pressing part 220 in a state where both end sides of the pressing part 220 in contact with the upper surface 51a located at the edge portion of the fitting hole 52. Then, both end sides of the pressing part 220 in contact with the upper surface 51a plastically deform the contact portions. This forms the coming-off preventing parts 521 projecting to the center side in the radial direction of the fitting hole 52 as illustrated in Fig. 11. In this event, the cross-section of the coming-off preventing parts 521 become a form illustrated in Fig. 7, Fig. 9 and later-described Fig. 14. Further, in this plastic deformation, dent parts 51b recessed from the upper surface 51a are formed at portions with which both end sides of the pressing part 220 have come into contact.

Note that in the configuration illustrated in Fig. 10, the punch 200 has the pressing part 220 in a long shape, so that two coming-off preventing parts 521 illustrated in Fig. 11 are formed at an interval of 180 degrees in the circumferential direction. However, the number of the coming-off preventing parts 521 is not limited, but any number of, such as one or three or more, coming-off preventing parts 521 may be formed. Further, a plurality of coming-off preventing parts 521 may be formed using not the punch 200 but another tool such as a center punch.

Besides, the caulking tool for performing caulking may be, for example, the one illustrated in Fig. 12. Fig. 12 is a partial perspective view illustrating a punch 200B different from the punch 200 illustrated in Fig. 10. The punch 200B illustrated in Fig. 12 is also provided with an insertion guide part 210B. However, the insertion guide part 210B is in a form different from that of the insertion guide part 210 illustrated in Fig. 10. Specifically, the insertion guide part 210B is in a hexagonal cylindrical shape by cutting corner parts of a triangular cylinder.

Note that, in this form, the corner parts of the hexagonal cylinder are preferably in contact with the inner wall of the fitting hole 52 for positioning, but may have a slight gap without contact therewith. Further, the insertion guide part 210B may be formed into the hexagonal cylindrical shape by cutting an upper side of a circular cylinder having the same diameter as that of, for example, the later-described pressing part 220B, but may be formed, not limited to the hexagonal cylinder, by other processing methods such as cutting a circular cylinder having a diameter of one size larger than that of the pressure part 220B.

Further, as illustrated in Fig. 12, the punch 200B has the pressing part 220B in a form different from that of the pressing part 220 illustrated in Fig. 10 at the lower side in the height direction than the insertion guide part 210B. The pressing part 220B is formed by cutting an unnecessary portion of a circular cylinder having a diameter larger than that of the fitting hole 52 for forming the dent parts 51b and the coming-off preventing parts 521. In the configuration illustrated in Fig. 12, the pressure part 220B is formed at three positions in total at an interval of, for example, 120 degrees in the circumferential direction.

As described above, the distance from the center to the end part of the pressing part 220B is formed to be larger than the radius of the fitting hole 52. Accordingly, the insertion guide part 210B is insertable into the fitting hole 52, whereas the pressing part 220B is uninsertable into the fitting hole 52. Note that when the insertion guide part 210B is inserted into the fitting hole 52 and then the punch 200B is hit with the not-illustrated hammer or the like from the side opposite to the pressing part 220B, both end sides of the pressing part 220B in contact with the upper surface 51a plastically deforms the contact portions. This forms the coming-off preventing parts 521 as illustrated in Fig. 13. Further, as in the case of the above-described Fig. 11, dent parts 51b recessed from the upper surface 51a are formed at portions with which both end sides of the pressing part 220B have come into contact.

Fig. 13 is a partial side sectional view illustrating a configuration around the fitting hole 52 of the head 51 of the bolt 50 to which a tag is to be attached according to the modification example of Fig. 7. Note that Fig.13 illustrates a state where cutting is performed not at one plane but at two planes arranged shifted by 120 degrees around the center in the radial direction of the fitting hole 52, and thus illustrates a state where the coming-off preventing parts 521 exist on the right and left of the fitting hole 52.

As illustrated in Fig. 13, the dent parts 51b recessed from the upper surface 51a and the coming-off preventing parts 521 are formed at portions with which the end parts of the pressure part 220B have come into contact. Here, the bottom part of the dent part 51b becomes a shape following the pressing part 220B, and is not in the taper shape as illustrated in Fig. 7, Fig. 9 and Fig. 14 but is in a form almost parallel to the upper surface 51a. Note that the pressing part 220B of the punch 200B illustrated in Fig. 12 may be made into a taper shape decreasing in height as going toward the end part side of the pressing part 220B as with the pressing part 220 illustrated in Fig. 10.

### (2) A case where the coming-off preventing part 521 is formed after the bolt attachment tag 10 is fitted into the fitting hole 52.

Besides, another method of the fitting method may form the coming-off preventing part 521 after the bolt attachment tag 10 is fitted into the fitting hole 52. In this case, the coming-off preventing parts 521 similar to those illustrated in Fig. 11 may be formed using a dedicated punch.

In this case, a recessed part in a ring shape is formed, for example, on the outer peripheral side sufficiently away from the fitting hole 52, and a projecting part for positioning to be fitted into the recessed part is also formed in the punch. Further, the punch is provided with a portion similar to the pressing part 220 in Fig. 10 in addition to the projecting part for positioning. The punch is hit with a not-illustrated hammer under such positioning, and thereby can form the coming-off preventing parts 521 similar to those illustrated in Fig. 11. Note that the coming-off preventing parts 521 may be formed using not the above-described punch but another tool such as a center punch.

### <Regarding other configuration examples of the tag 10 to be attached to a bolt, the bolt 50 to which a tag is to be attached, and bolt 100 with a built-in tag >

Next, other configuration examples of the tag 10 to be attached to a bolt, the bolt 50 to which a tag is to be attached, and bolt 100 with a built-in tag will be described.

Fig. 14 is a partial side sectional view illustrating configurations of a tag 10 to be attached to a bolt according to a configuration example different from that of the tag 10 to be attached to a bolt illustrated in Fig. 1 (referred to as a tag 10B to be attached to a bolt), a bolt 50 to which a tag is to be attached (referred to as bolt 50B to which a tag is to be attached), and an 100 with a built-in tag (referred to as an bolt 100B with a built-in tag). In the configuration illustrated in Fig. 14, a fitting hole 52B formed in the head 51 is bored by a drill having a predetermined point angle. The point angle of the drill is generally 118 degrees but may be a point angle other than 118 degrees. Accordingly, the fitting hole 52B is a blind hole by drilling, and is provided with a conical recessed part 52a according to the point angle of the drill.

Therefore, a tag protection part 30B of the tag 10B to be attached to a bolt is provided with a pointed part 35 corresponding to the conical recessed part 52a, and the pointed part 35 fits into the conical recessed part 52a. Accordingly, it is possible to suppress instability (backlash) of the tag 10B to be attached to a bolt inside the fitting hole 52 even when the tag 10B to be attached to a bolt is fitted into the fitting hole 52B of the bolt 50B to which a tag is to be attached.

Fig. 15 is a partial side sectional view illustrating configurations of a tag 10 to be attached to a bolt according to a configuration example further different from those of the tags 10, 10B to be attached to a bolt illustrated in Fig. 1 and Fig. 14 (referred to as a tag 10C to be attached to a bolt), a bolt 50 to which a tag is to be attached (referred to as a bolt 50C to which a tag is to be attached), and an bolt 100 with a built-in tag (referred to as an 100C with a built-in tag).

In the configuration illustrated in Fig. 15, a fitting hole 52C formed in the head 51 is provided to be shallow in depth as compared with the fitting hole 52 illustrated in Fig. 6 and Fig. 7. Therefore, the tag 10C to be attached to a bolt is provided to be flash with or substantially flush with the upper surface 51a of the head 51.

On the other hand, in a tag protection part 30C of the bolt attachment tag 10C, the primary molded part 33 and the secondary molded part 34 are provided in a reverse arrangement. In addition, a hook part 36 is provided on a side surface side of the primary molded part 33. Note that the hook part 36 is a portion corresponding to the locking part. The hook part 36 has a cross section in a hook shape. Specifically, the primary molded part 33 is provided with a side surface along the center in the axial direction of the fitting hole 52C from the upper side toward the lower side, and the hook part 36 in a hook shape is provided at a midway portion of the side surface. Note that a flat part 36a almost parallel to the bottom surface of the fitting hole 52C is provided on an upper end side of the hook part 36, and a tapered part 36b is also provided which gradually goes toward the center in the radial direction as going downward from the flat part 36a.

By providing the hook part 36 at the midway portion of the side surface of the primary molded part 33 as described above, the coming-off preventing part 521 is locked at the midway portion of the side surface of the primary molded part 33. Accordingly, the depth of the fitting hole 52C can be made shallow.

### <Regarding communication between the 100 with a built-in tag and a tool 60>

Fig. 16 is diagram illustrating an image of communication performed between a tool 60 and the bolt 100 with a built-in tag which has been attached to a target member 300. Note that, in Fig. 16, a torque wrench in a ratchet shape is illustrated as the tool 60, but the tool 60 may be a tool that detects the tag 10 to be attached to a bolt with another tool such as a test hammer, an ordinary wrench or the like and has at least a reading part 63 embedded therein. In the tool 60 illustrated in Fig. 16, a reader device 65 is mounted for communicating with the bolt 100 with a built-in tag.

Further, an angle drive part 62 fitted to a detachable-type socket 61 is provided with the reading part 63 including a coil. The reading part 63 is electrically connected to the reader device 65 via a cable 64. The reader device 65 is connected to a upper system 70 via a wireless or wired network. The upper system 70 accumulates data such as the ID, use start date, inspection date and so on of the bolt 100 with a built-in tag with the tag 10 to be attached to a bolt attached thereto.

As described above, the bolt 100 with a built-in tag and the upper system 70 transmit and receive information through the reader device 65 and over the network, thereby making it possible to manage the attachment status and inspection status of the bolt 100 with a built-in tag.

### <Regarding effects>

According to the tag 10, 10B, 10C to be attached to a bolt and the 100, 100B, 100C with a built-in tag having the above-described configurations, the locking part 31 which projects to the outer diameter side more than other portions of the tag protection part 30, 30B, 30C is provided on the outer peripheral side of the tag protection part 30, 30B, 30C. The locking part 31 comes into contact with the coming-off preventing part 521 located at the opening edge part of the fitting hole 52, 52B, 52C to prevent the bolt attachment tag 10, 10B, 10C from coming off the fitting hole 52, 52B, 52C.

Accordingly, it is possible to attach the tag 10, 10B, 10C to be attached to a bolt to the fitting hole 52, 52B, 52C of the bolt 50, 50B, 50C to which a tag is to be attached without using an adhesive. Further, existence of the locking part 31 makes it possible to prevent the tag 10, 10B, 10C to be attached to a bolt from coming off the fitting hole 52, 52B, 52C.

Further, this embodiment employs a configuration in which the required minimum fitting hole 52, 52B, 52C is provided for preventing the tag 10, 10B, 10C to be attached to a bolt from coming off the fitting hole 52, 52B, 52C without requiring other member and hole, and the coming-off preventing part 521 is provided at the opening edge part. Accordingly, it becomes possible to surely prevent falling-off of the tag 10, 10B, 10C to be attached to a bolt while preventing a decrease in mechanical strength of the bolt 50, 50B, 50C to which a tag is to be attached.

Further, in the embodiment in which only the fitting hole 52, 52B, 52C is formed and the tag 10, 10B, 10C to be attached to a bolt is attached afterwards, the following is employable. Specifically, even when a screw and a bolt attached to an apparatus and a structure to be managed are ordinary screw and bolt in which the IC tag is not originally embedded, the tag 10, 10B, 10C to be attached to a bolt can be attached by opening the fitting hole 52, 52B, 52C in the existing screw and bolt without replacement by the bolt 100, 100B, 100C with a built-in tag. This can improve the reliability without forcedly replacing the bolt.

Further, in this embodiment, the tag protection part 30, 30B, 30C is composed of the primary molded part 33 which is formed with the recessed fitting part 331 for fitting the IC inlet 20 thereinto and the secondary molded part 34 which is fixed to the primary molded part 33 and seals, in a lid shape, the recessed fitting part 331. In addition, both the primary molded part 33 and the secondary molded part 34 are formed of the thermoplastic resin. Accordingly, the IC inlet 20 is fitted into the recessed fitting part 331, and then the secondary molded part 34 in a lid shape is placed thereon and then subjected to thermal fusion bonding, whereby the secondary molded part 34 can be surely attached to the primary molded part 33. Accordingly, it is possible to hold the IC inlet 20 inside the tag protection part 30, 30B, 30C without using an adhesive and to surely seal the IC inlet 20 from outside.

Further, in this embodiment, the escape groove 32 in a ring shape recessed from the front surface (one surface) of the tag protection part 30, 30B is formed on the outer peripheral side of the tag protection part 30, 30B. In addition, the side surface of the tag protection part 30, 30B is the inclined surface which is inclined to gradually go toward the center side in the radial direction as going from one surface toward the other surface.

Accordingly, the escape groove 32 is made into a state in which the wall is reduced on the lower side, and thereby can improve the insertion property when the tag 10, 10B to be attached to a bolt is inserted into the later-described fitting hole 52, 52B. In addition, in the tag protection part 30, 30B, the escape groove 32 is made into a state in which the wall is reduced on the lower side, whereby the tag protection part 30, 30B becomes more likely to elastically deform, thereby also improving the property of inserting the tag 10, 10B to be attached to a bolt into the fitting hole 52, 52B.

Further, in this embodiment, in the tag protection part 30, 30B, Tc, Ta, Tb are set to be Tc ≤ Ta ≤ Tb where the thickness in the radial direction of the portion on the outer peripheral side outer than the groove center 32a of the escape groove 32 is Ta, the t insertion limit thickness in elastic deformation when inserted into the fitting hole 52, 52B is Tb, and the lower limit thickness of generating the clicking feeling when inserted into the fitting hole 52, 52B is Tc. Therefore, it is possible to ensure the insertion property when the tag 10, 10B to be attached to a bolt is inserted into the fitting hole 52, 52B, and generate excellent clicking feeling at the insertion time.

Further, in this embodiment, the projecting support part 331a is provided in a manner to project from the inner wall of the recessed fitting part 331 of the tag protection part 30, 30B, 30C. The IC inlet 20 is supported in a holded state while being in contact with the projecting support part 331a inside the recessed fitting part 331. Accordingly, it becomes possible to prevent the IC inlet 20 from falling off the recessed fitting part 331 in a state where the IC inlet 20 is attached to the recessed fitting part 331 but the secondary molded part 34 is not attached yet.

### (Second Embodiment)

Hereinafter, a second embodiment of the present invention will be described. Fig. 17 is a side sectional view illustrating a configuration of a pseudo bolt 400 according to the second embodiment and illustrating a state where the pseudo bolt 400 is attached to a target member 300. In the pseudo bolt 400 of this embodiment, only a portion corresponding to the head 51 of the above-described bolt 50 to which a tag is to be attached exists. Accordingly, as illustrated in Fig. 17, the pseudo bolt 400 is attached to the target member 300 by, for example, welding.

Note that the form of the pseudo bolt 400 is that the portion corresponding to the head 51 exists as described above, but when the pseudo bolt 400 is attached to the target member 300, the pseudo bolt 400 seems as if an ordinary bolt is attached to the target member 300 in appearance. Therefore, the pseudo bolt 400 in the second embodiment can also be construed as one aspect of the tag attachment bolt 50. Further, the pseudo bolt 400 in the case where the bolt attachment tag is attached thereto, can be construed as one aspect of the bolt 100 with a built-in tag.

Note that in consideration of positioning at the time when attaching the pseudo bolt 400 to the target member 300 by welding or the like, the pseudo bolt 400 may be provided with a positioning part such as a projecting part or recessed part for positioning, and the target member 300 may be provided with a fitting part fitting with the positioning part.

### <Regarding effects>

In the case of employing such a configuration, the pseudo bolt 400 can be made to play a roll of nameplate information indicating as if it is a representative of a structure. As with the bolt 100 with a built-in tag, the tool 60 including the reader device 65 as illustrated in Fig. 16 and the pseudo bolt 400 perform communication with each other. Then, data such as the ID, use start date, inspection date and so on of the pseudo bolt 400 is accumulated. This means the possibility of giving the ID to the target member 300 and managing the target member 300 by the same tool 60 for the nameplate information and the pseudo bolt 400. Accordingly, it is possible to manage the target member 300 and the bolt 100 with a built-in tag attached to the target member 300, and perform various kinds of management such as whether or not a bolt of an appropriate size is attached to the target member 300 and the like.

### <Modifications>

Embodiments of the present invention have been described above, but the present invention can be variously modified in addition to the above. Hereinafter, the modifications will be described.

The above first embodiment describes the configuration in which the tag 10 to be attached to a bolt is attached to the head 51 side of the bolt 50 to which a tag is to be attached. However, the tag 10 to be attached to a bolt may be attached to other than the head 51 of the bolt 50 to which a tag is to be attached. For example, a fitting hole similar to the fitting hole 52 may be formed at the tail on the opposite side to the head 51 in the longitudinal direction of the bolt 50 to which a tag is to be attached, and the b tag 10 to be attached to a bolt may be attached to the fitting hole.

Further, in the above-described first embodiment, the tag 10, 10B, 10C to be attached to a bolt is fitted, in a state where the long side of the almost trapezoid is located on the upper side (opening side), into the fitting hole 52, 52B, 52C as illustrated in Fig. 7 and so on. However, the tag 10, 10B, 10C to be attached to a bolt may be fitted reversely thereto (in an opposite direction).

Further, in the above-described first embodiment, a pair of projecting support projection 331a are provided and the interval between the tips of the pair of opposed projecting support parts 331a is provided to be slightly shorter than the length in the vertical direction or the horizontal direction of the IC inlet 20. However, the number of the projecting support parts 331a is not limited to a pair (two). For example, only one projecting support part 331a may be provided and configured to hold the IC inlet 20 between the projecting support part 331a and the inner wall opposed thereto. Further, such a configuration may be employed that three or more projecting support parts 331a are provided on at least one or more inner walls to hold the IC inlet 20.

Further, in each of the above-described embodiments, the tag 10, 10B, 10C to be attached to a bolt is provided in a disk shape. However, the tag 10, 10B, 10C to be attached to a bolt is not limited to the disk shape but may employ other shapes. For example, the tag 10, 10B, 10C to be attached to a bolt may be made into a hexagonal shape so as to fit in a hexagon hole of a hexagon socket head bolt, may be made into a rectangular shape, or may be made into an oval shape such as an ellipse.

Further, in the above first embodiment, the tag protection part 30 is composed of the primary molded part 33 and the secondary molded part 34. However, the tag protection part may be formed by thermally laminating two thermoplastic film members or the like. In this case, between the two film members, the IC inlet 20 is arranged. Further, the shape of the tag protection part may be molded again while performing thermal lamination.

Further, in each of the above-described embodiments, the frequency of the UHF band used in RFID communication is preferably 920 MHz. However, as the frequency of the UHF band used in RFID communication, any frequency may be employed as long as it is in a band ranging, for example, from 860 MHz to 960 MHz. Further, the frequency used in RFID communication is not limited to the frequency of the UHF band but may be a frequency around 2.45 GHz, may be a frequency around 433 MHz, and may be 13.56 MHz in another frequency HF band.

### {Reference Signs List}

10, 10B, 10C ... bolt attachment tag, 20 ... IC inlet, 21 ... IC tag base board, 22 ... IC chip, 23 ... coil antenna, 30, 30B, 30C ... tag protection part, 31 ... locking part, 32 ... escape groove, 32a ... groove center, 33 ... primary molded part, 34 ... secondary molded part, 35 ... pointed part, 36 ... hook part (corresponding to locking part), 36a ... flat part, 36b ... taper part, 50, 50B, 50C ... tag attachment bolt, 51 ... head, 51a ... upper surface, 51b ... dent part, 52, 52B, 52C ... fitting hole, 60 ... tool, 61 ... socket, 62 ... angle drive part, 63 ... reading part, 64 ... cable, 65 ... reader device, 70 ... high-order system, 100, 100B, 100C ... IC tag built-in bolt, 200 ... punch, 210 ... insertion guide part, 220 ... pressure part, 300 ... target member, 331 ... recessed fitting part, 331a ... projecting support part, 332 ... pedestal part, 333 ... taper part, 341 ... lower inclined part, 342 ... upper inclined part, 400 ... pseudo bolt, 521 ... coming-off preventing part, 521a ... plane contact part, 521b ... guide part

## Claims

1. A bolt with a built-in tag having a fitting hole (52), a tag (10) to be attached to a bolt (50), the bolt (50) with the built-in tag comprising:
an IC inlet (20) having an IC chip (22) and a coil antenna (23); and
a tag protection part (30) which covers the IC inlet (20), **characterized in that**
a locking part (31) projecting to an outer diameter side more than other portions of the tag protection part (30) is provided on an outer peripheral side of the tag protection part (30), and the locking part (31) comes into contact with a coming-off preventing part (521) located at an opening edge part of the fitting hole (52) to prevent the tag from coming off the fitting hole (52), and **in that** the tag protection part (30) comprises:
a primary molded part (33) which is formed with a recessed fitting part (331) for fitting the IC inlet (20) thereinto and formed of a thermoplastic resin; and
a secondary molded part (34) which is fixed to the primary molded part (33) to seal the recessed fitting part (331) in a lid shape, and is formed of a thermoplastic resin.

2. The bolt with a built-in tag according to claim 1, wherein
an escape groove (32) in a ring shape recessed from one surface of the tag protection part (30) is formed on the outer peripheral side of the tag protection part (30); and
a side surface of the tag protection part (30) is an inclined surface which is inclined to gradually go toward a center side in a radial direction as going from the one surface toward the other surface.

3. The bolt with a built-in tag according to claim 2, wherein
the tag protection part (30), when inserted into the fitting hole (52) of the bolt (50), is inserted while elastically deforming due to existence of the coming-off preventing part (521) which projects toward the center side in the radial direction at an opening portion of the fitting hole (52),
in which Tc, Ta, Tb are set to be Tc ≤ Ta ≤ Tb
where a thickness in a radial direction of a portion on the outer peripheral side outer than a groove center of the escape groove (32) is Ta, an insertion limit thickness in elastic deformation when inserted into the fitting hole (52) is Tb, and a thickness of a lower limit of generating clicking feeling when inserted into the fitting hole (52) is Tc.

4. The bolt with a built-in bolt tag according to any one of claims 1 to 3, wherein
a projecting support part (331a) is provided in a manner to project from an inner wall of the recessed fitting part (331); and
the IC inlet (20) is supported in a holded state while being in contact with the projecting support part (331a) inside the recessed fitting part (331).

## Patentansprüche

1. Ein Bolzen mit einer integrierten Kennung, der ein Einpassloch (52) aufweist, eine Kennung (10), die an einem Bolzen (50) anzubringen ist, wobei der Bolzen (50) mit der integrierten Kennung folgende Merkmale aufweist:
einen IC-Einlass (20) mit einem IC-Chip (22) und einer Spulenantenne (23); und
ein Kennungsschutzteil (30), das den IC-Einlass (20) bedeckt,
**dadurch gekennzeichnet, dass**
ein Verriegelungsteil (31), das weiter zu einer Außendurchmesserseite vorsteht als andere Abschnitte des Kennungsschutzteils (30) an einer Außenumfangsseite des Kennungsschutzteils (30) vorgesehen ist, und das Verriegelungsteil (31) in Kontakt kommt mit einem Ablöseverhinderungsteil (521), das an einem Öffnungsrandteil des Einpasslochs (52) angeordnet ist, um zu verhindern, dass die Kennung sich von dem Einpassloch (52) löst, und
dadurch, dass das Kennungsschutzteil (30) folgende Merkmale aufweist:
ein primäres geformtes Teil (33), das mit einem ausgenommenen Einpassteil (331) zum Einpassen des IC-Einlasses (20) darin gebildet ist und aus einem thermoplastischen Harz gebildet ist; und
ein sekundäres geformtes Teil (34), das an dem primären geformten Teil (33) fixiert ist, um das ausgenommene Einpassteil (331) in einer Deckelform abzudichten und aus einem thermoplastischen Harz gebildet ist.

2. Der Bolzen mit einer integrierten Kennung gemäß Anspruch 1, bei dem
eine Austrittsrille (32) in einer Ringform, die von einer Oberfläche des Kennungsschutzteil (30) ausgenommen ist, auf der Außenumfangsseite des Kennungsschutzteils (30) gebildet ist; und
eine Seitenoberfläche des Kennungsschutzteils (30) eine geneigte Oberfläche ist, die geneigt ist, um allmählich in einer Radialrichtung zu einer Mittelseite zu verlaufen, während dieselbe von der einen Oberfläche zu der anderen Oberfläche verläuft.

3. Der Bolzen mit einer integrierten Kennung gemäß Anspruch 2, bei dem
das Kennungsschutzteil (30), wenn dasselbe in das Einpassloch (52) des Bolzens (50) eingefügt wird, eingefügt wird, während dasselbe sich elastisch verformt aufgrund des Vorhandenseins des Ablöseverhinderungsteils, das an einem Öffnungsabschnitt des Einpasslochs (52) in der Radialrichtung zu der Mittelseite vorsteht,
Tc, Ta, Tb auf T ≤ Ta ≤ Tb eingestellt sind,
wobei eine Dicke in einer Radialrichtung eines Abschnitts auf der Außenumfangsseite weiter außen als eine Rillenmitte der Austrittsrille (32) Ta ist, eine Einfügungsgrenzendicke bei einer elastischen Verformung bei einer Einfügung in das Einpassloch (52) Tb ist und eine Dicke einer unteren Grenze des Erzeugens eines Klickgefühls bei einer Einfügung in das Einpassloch (52) Tc ist.

4. Der Bolzen mit einer integrierten Bolzenkennung gemäß einem der Ansprüche 1 bis 3, bei dem
ein vorstehendes Trageteil (331a) so vorgesehen ist, dass dasselbe von einer Innenwand des ausgenommenen Einpassteils (331) vorsteht; und
der IC-Einlass (20) in einem gehaltenen Zustand getragen wird, während derselbe mit dem vorstehenden Trageteil (331a) in dem ausgenommenen Einpassteil (331) in Kontakt ist.

## Revendications

1. Boulon avec une étiquette intégrée présentant un trou de montage (52), une étiquette (10) à fixer à un boulon (50), le boulon (50) avec l'étiquette intégrée comprenant:
une entrée de CI (20) présentant une puce à CI (22) et une antenne bobinée (23); et
une partie de protection d'étiquette (30) qui recouvre l'entrée de CI (20),
**caractérisé par le fait que**
une partie de verrouillage (31) ressortant plus vers un côté de diamètre extérieur que d'autres portions de la partie de protection d'étiquette (30) est prévue d'un côté périphérique extérieur de la partie de protection d'étiquette (30), et la partie de verrouillage (31) entre en contact avec une partie empêchant le détachement (521) située à une partie de bord d'ouverture du trou de montage (52) pour empêcher que l'étiquette ne se détache du trou de montage (52),
et **par le fait que** la partie de protection d'étiquette (30) comprend:
une partie moulée primaire (33) qui est formée avec une partie de montage évidée (331) pour y monter l'entrée de CI (20) et formée en une résine thermoplastique; et
une partie moulée secondaire (34) qui est fixée à la partie moulée primaire (33) pour sceller la partie de montage évidée (331) en forme de couvercle, et est formée en une résine thermoplastique.

2. Boulon avec une étiquette intégrée selon la revendication 1, dans lequel
une rainure d'échappement (32) en forme d'anneau évidée dans une surface de la partie de protection d'étiquette (30) est formée du côté périphérique extérieur de la partie de protection d'étiquette (30); et
une surface latérale de la partie de protection d'étiquette (30) est une surface inclinée qui est inclinée pour aller progressivement vers un côté central dans une direction radiale comme si elle allait d'une surface vers l'autre surface.

3. Boulon avec une étiquette intégrée selon la revendication 2, dans lequel
la partie de protection d'étiquette (30), lorsqu'elle est insérée dans le trou de montage (52) du boulon (50), est insérée tout en se déformant élastiquement du fait de l'existence de la partie empêchant le détachement (521) qui ressort vers le côté central dans le direction radiale au niveau d'une partie d'ouverture du trou de montage (52),
dans lequel Te, Ta, Tb sont réglés de manière à être Tc ≤ Ta ≤ Tb
où une épaisseur dans une direction radiale d'une partie du côté périphérique extérieur plus à l'extérieur qu'un centre de rainure de la rainure d'échappement (32) est Ta, une épaisseur de limite d'insertion en déformation élastique lorsqu'elle est insérée dans le trou de montage (52) est Tb, et une épaisseur d'une limite inférieure de génération de sensation de clic lorsqu'elle est insérée dans le trou d'ajustement (52) est Tc.

4. Boulon avec une étiquette de boulon intégrée selon l'une quelconque des revendications 1 à 3, dans lequel
une partie de support en saillie (331a) est prévue de manière à ressortir d'une paroi intérieure de la partie de montage évidée (331); et
l'entrée de CI (20) est supportée dans un état maintenu tout en étant en contact avec la partie de support en saillie (331a) à l'intérieur de la partie de montage évidée (331).
